# EUROPÄISCHE PATENTSCHRIFT

(11) **EP 1 761 717 B1**
(45) Veröffentlichungstag und Bekanntmachung des Hinweises auf die Patenterteilung: **17.12.2008**
(21) Anmeldenummer: 05749737.2
(22) Anmeldetag: 12.05.2005
(51) Int. Cl.: F16F 9/04, F16F 9/05, F16F 9/43

(54) **LUFTFEDER MIT EINEM ABROLLKOLBEN UND EINEM ROLLBALG MIT MINDESTENS EINEM ANVULKANISIERTEN BEFESTIGUNGSTEIL**
AIR SPRING WITH A ROLL-OFF PISTON AND WITH A ROLLING LOBE HAVING AT LEAST ONE FASTENING PART VULCANIZED THEREON
RESSORT PNEUMATIQUE MUNI D'UN PISTON DE DEROULEMENT ET D'UN SOUFFLET TUBULAIRE COMPORTANT AU MOINS UNE PARTIE DE FIXATION VULCANISEE DESSUS

(30) Priorität: 23.06.2004 DE 102004030335
(43) Veröffentlichungstag der Anmeldung: 14.03.2007
(73) Patentinhaber: ContiTech Luftfedersysteme GmbH, 30165 Hannover (DE)
(72) Erfinder: SCHOLZ, Karsten, 30449 Hannover (DE)
(74) Vertreter: Finger, Karsten
(86) Internationale Anmeldenummer: PCT/EP2005/052164
(87) Internationale Veröffentlichungsnummer: WO 2006/000499

(56) Entgegenhaltungen:
- EP-A- 0 451 749
- EP-A- 0 870 947
- WO-A-00/73676
- DE-A1- 4 115 028
- DE-A1- 4 327 585
- DE-A1- 4 428 601
- DE-U1- 9 203 929
- DE-U1- 20 210 955
- PATENT ABSTRACTS OF JAPAN Bd. 1999, Nr. 02, 26. Februar 1999 (1999-02-26) & JP 10 299808 A (TOYO TIRE & RUBBER CO LTD), 13. November 1998 (1998-11-13)

## Beschreibung

Die Erfindung betrifft eine Luftfeder mit einem Abrollkolben und einem Rollbalg aus Gummi oder Gummi-ähnlichem Material, wobei mindestens dessen Öffnung, die der dem Abrollkolben zugeordneten Öffnung gegenüberliegt, mit einem Befestigungsteil luftdicht verschlossen ist und das Befestigungsteil einen ebenen Anschlussbereich mit mindestens einem Luftanschluss und einem Außenrand und einen dem Rollbalg zugewandten Konusbereich aufweist, wobei der Rollbalg in einem von der dem Rollbalg zugewandten Seite des Außenrandes sich in den Konusbereich erstreckenden Vulkanisationsbereich mit dem Befestigungsteil fest zusammenvulkanisiert ist.

Das Befestigungsteil des Rollbalges hat die Aufgabe, den Rollbalg an einer Karosserie eines Kraftfahrzeuges, vorzugsweise eines Lastwagens, festzuhalten. Dabei muss das Befestigungsteil den Rollbalg außerdem luftdicht abschließen. Das gegenüberliegende Ende des Rollbalges ist beispielsweise mit einem Konussitz auf dem Abrollkolben luftdicht fixiert oder kann ein zweites Befestigungsteil, beispielsweise einen Spannteller, aufweisen, der entweder fest an den Rollbalg anvulkanisierbar ist oder durch Anziehen einer Schraube oder eines anderen Befestigungsteiles am Rollbalg luftdicht am Kolben fixierbar ist.

Das obere Befestigungsteil kann beispielsweise als Bördelplatte ausgeführt sein, die an den fertig ausvulkanisierten Rollbalg durch einen Gesenkbördelvorgang mechanisch angekoppelt ist. Das Befestigungsteil kann auch, wie eingangs beschrieben, als Konusplatte fest an den Rollbalg anvulkanisiert sein.

Die DE 43 27 585 A1 beschreibt eine Luftfeder, deren Rollbalg mit einem Dichtwulst auf einem konischen Dichtsitz eines Befestigungsteils befestigt ist, wobei über die Art der Befestigung keine näheren Angaben zu finden sind. Derartige Luftfedern sind in einer Vielzahl von Ausführungen im Einsatz, wobei die in der DE 43 27 585 A1 dargestellte Lösung der Befestigung des Rollbalges an einem Befestigungsteil als eine typische Ausführungsform gelten kann. Das Befestigungsteil ist dabei im Wesentlichen als Konusplatte ausgebildet und weist meist einen Luftanschluss auf, der häufig auch gleichzeitig als Befestigungselement dient. Es sind auch Versionen mit mehreren Luftanschlüssen und weiteren Anschlüssen bekannt. Die Konusplatten bestehen neben den Anschlüssen hauptsächlich aus zwei miteinander verschweißten Blechen, nämlich einer Rundscheibe und einem konischen Ring. Vereinfachend und zur Vermeidung von Verwerfungen der Rundscheibe ist der konische Ring meist nur punktuell und nicht durchgehend mit der Rundscheibe verschweißt. Wird der Rollbalg an das Befestigungsteil anvulkanisiert, muss der Vulkanisationsbereich vor der Vulkanisation in einem separaten Arbeitsgang mit einem Haftvermittler beschichtet werden. Jeweils eine Konusplatte wird dann im Herstellprozess in die Öffnung des Rollbalg-Rohlings eingelegt, die der dem Rollbalg zugeordneten Öffnung gegenüberliegt und in der Vulkanisationspresse mit dem Rollbalg zusammen vulkanisiert.

Diese Art der Befestigung weist die Nachteile auf, dass
- für den Luftanschluss und die weiteren Anschlüsse ein aufwändiger Schweißprozess erforderlich ist,
- zwischen dem konusförmigen Ring und der Rundscheibe beim punktförmigen Schweißen ein unerwünschter Spalt entstehen kann, durch den das Gummi beim Vulkanisationsprozess in das Innere des Balges fließen kann,
- eine Dichtheitskontrolle erforderlich ist, um die Güte der Schweißnähte an den Anschlüssen zu überprüfen und
- die Konusplatte gegen Korrosion geschützt werden muss.

Die Luftanschlüsse sind außerdem als Drehteile ausgeführt und damit kostenintensiv.

Der Erfindung liegt die Aufgabe zugrunde, eine Luftfeder der eingangs beschriebenen Art zu schaffen, deren Rollbalg mindestens ein anvulkanisiertes Befestigungsteil aufweist, welches ohne aufwändige Schweißoperationen herstellbar ist, keine Spalte aufweist und für das keine Dichtheitskontrolle erforderlich ist.

Diese Aufgabe wird durch die Merkmale des Anspruchs 1 gelöst.

Diese Ausführung hat den Vorteil, dass die Kopfplatte in einem Arbeitsgang, vorzugsweise einem Kunststoff-Spritzgieß-Vorgang ohne Schweißen herstellbar ist. Somit kann die Dichtheitskontrolle entfallen. Ein zusätzlicher Korrosionsschutz ist nicht erforderlich.

In einer Weiterbildung der Erfindung weist die Kopfplatte in ihrem Inneren Verstärkungseinlagen aus Metall auf.

Diese Verstärkungseinlagen können die Festigkeit der Kopfplatte gegen Bersten oder Verformung vorteilhaft steigern.

In einer weiteren Ausbildung der Erfindung ist ein Haftvermittler im Vulkanisationsbereich der Kopfplatte als thermoplastisches Material ausgeführt, welches direkt beim Herstellungsprozess der Kopfplatte als zweite Komponente mit aufbringbar ist.

Dies hat den Vorteil, dass eine nachträgliche kostenintensive Beschichtung der Kopfplatten mit Haftvermittler nicht erforderlich ist.

Ein derartiges erfindungsgemäßes Befestigungsteil ist einfach und kostengünstig herstellbar, da Schweißvorgänge komplett entfallen und Kunststoff ein einfach zu verarbeitendes, leichtes und korrosionsbeständiges Material ist. Aufwändige nachträgliche Handhabung wie Beschichtungen oder Dichtheitskontrollen können entfallen. Dadurch, dass die Kopf platten keine Spalten mehr aufweisen, ist das Risiko von Vulkanisationsfehlern deutlich verringert.

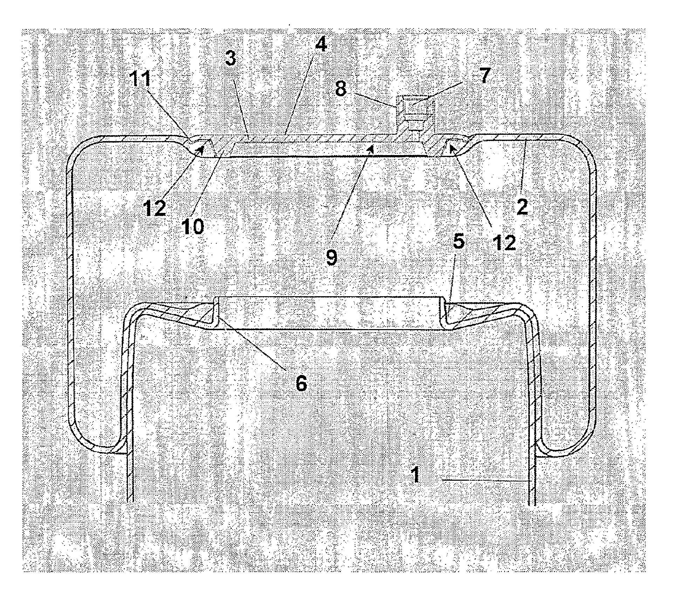

Anhand der Zeichnung wird nachstehend ein Beispiel der Erfindung näher erläutert.

Die Figur zeigt den oberen Abschnitt einer Luftfeder mit einem Abrollkolben 1, einem Rollbalg 2 aus elastomerem Material und einer Kopfplatte 3 aus einem thermoplastischen Kunststoff.
Der Rollbalg 2 ist mittels eines Konussitzes 5 luftdicht auf einem Anschlusskonus 6 des Abrollkolbens 1 befestigt.
Die Kopfplatte 3 weist einen Luftanschluss 7 auf. Außen am Luftanschluss 7 ist ein Außengewinde 8 angeordnet, mittels dessen die Luftfeder an einer nicht gezeigten Karosserie eines Kraftfahrzeuges befestigbar ist.

Auf der Unterseite 9 der Kopfplatte 3 ist vom Außenrand 11 der Kopfplatte 3 beabstandet ein Ring 10 angeordnet, der einen konusförmigen Querschnitt aufweist.

Am Außenumfang des Konusringes 10 auf der Unterseite 9 der Kopfplatte 3 ist in einem Vulkanisationsbereich 12 der Rollbalg 2 an die Kopfplatten 3 fest und luftdicht anvulkanisiet.

Die Kopfplatte 3 wird einschließlich Luftanschluss 7 und Konusring 9 in einem Kunststoff-Spritzgieß-Vorgang aus thermoplastischem Kunststoff, wie z.B. PA 6.6 GF, hergestellt. Dabei kann ein nicht gezeigter Haftvermittler im Vulkanisationsbereich 12 als zweite Komponente simultan aufgebracht werden.

### Bezugszeichenliste

### (Teil der Beschreibung)

- 1: Abrollkolben
- 2: Rollbalg
- 3: Kopfplatte
- 4: Anschlussbereich der Kopfplatte 3
- 5: Konussitz des Rollbalges 3
- 6: Anschlusskonus des Abrollkolbens 2
- 7: Luftanschluss
- 8: Außengewinde des Luftanschlusses 7
- 9: Unterseite der Kopfplatte 3
- 10: Konusbereich der Kopfplatte 3
- 11: Außenrand der Kopfplatte 3
- 12: Vulkanisationsbereich

## Patentansprüche

1. Luftfeder mit einem Abrollkolben (1) und einem Rollbalg (2) aus Gummi oder Gummi-ähnlichem Material, wobei mindestens dessen Öffnung, die der dem Abrollkolben (1) zugeordneten Öffnung gegenüberliegt, mit einem Befestigungsteil (3) luftdicht verschlossen ist und das Befestigungsteil (3) einen ebenen Anschlussbereich (4) mit mindestens einem Luftanschluss (7) und einem Außenrand (11) und einen dem Rollbalg (2) zugewandten Konusbereich (10) aufweist, **dadurch gekennzeichnet, dass** der Rollbalg (2) mit dem Befestigungsteil (3) in einem von der dem Rollbalg zugewandten Seite des Außenrandes (11) sich in den Konusbereich (10) des Befestigungsteiles (3) erstreckenden Vulkanisationsbereich (12) mit dem Befestigungsteil (3) fest zusammenvulkanisiert ist, wobei das an den Rollbalg (2) anvulkanisierte mindestens eine Befestigungsteil als Kopfplatte (3) vollständig mit allen Anschlüssen (7) aus einem thermoplastischen oder duroplastischen Kunststoff ausgeführt ist.

2. Luftfeder nach Anspruch 1, **dadurch gekennzeichent, dass** die Kopfplatte (3) in ihrem Inneren Verstärkungseinlagen aus Metall aufweist.

3. Luftfeder nach Anspruch 1 oder 2, **dadurch gekennzeichnet, dass** ein Haftvermittler im Vulkanisationsbereich (12) der Kopfplatte (3) als thermoplastisches Material ausgeführt ist, welches als zweite Komponente direkt beim Herstellungsprozess der Kopfplatte (3) mit aufbringbar ist.

## Claims

1. Air spring with a roll-off piston (1) and with a rolling lobe (2) made of rubber or rubber-like material, wherein at least its opening which lies opposite the opening assigned to the roll-off piston (1) is sealed hermetically with a fastening part (3), and the fastening part (3) has a planar connecting region (4) with at least one air connection (7) and an outer edge (11), and a conical region (10) which faces the rolling lobe (2), **characterized in that** the rolling lobe (2) is fixedly vulcanized together with the fastening part (3) in a vulcanization region (12) which extends from that side of the outer edge (11) which faces the rolling lobe into the conical region (10) of the fastening part (3), with the at least one fastening part which is vulcanized onto the rolling lobe (2) being designed as a head plate (3) made of a thermoplastic or thermosetting plastic complete with all of the connections (7).

2. Air spring according to Claim 1, **characterized in that** the interior of the head plate (3) has metal reinforcement inserts.

3. Air spring according to Claim 1 or 2, **characterized in that** an adhesion promoter in the vulcanization region (12) of the head plate (3) is designed as a thermoplastic material which can be applied as a second component directly during the process to manufacture the head plate (3).

## Revendications

1. Ressort pneumatique comprenant un piston de déroulement (1) et un soufflet tubulaire (2) en caoutchouc ou en matériau similaire au caoutchouc, au moins son ouverture, qui est opposée à l'ouverture associée au piston de déroulement (1) étant fermée de manière étanche à l'air par une pièce de fixation (3) et la pièce de fixation (3) présentant une région de raccordement (4) plane avec au moins un raccord d'air (7) et un bord extérieur (11), et une région conique (10) tournée vers le soufflet tubulaire (2), **caractérisé en ce que** le soufflet tubulaire (2) est vulcanisé fermement, conjointement avec la pièce de fixation (3), dans une région de vulcanisation (12) s'étendant depuis le côté du bord extérieur (11) tourné vers le soufflet tubulaire/dans la région conique (10) de la pièce de fixation (3), l'au moins une pièce de fixation vulcanisée sur le soufflet tubulaire (2) étant réalisée sous forme de plaque de tête (3) complètement avec tous les raccords (7), à partir d'un plastique thermoplastique ou duroplastique.

2. Ressort pneumatique selon la revendication 1, **caractérisé en ce que** la plaque de tête (3) présente, en son intérieur, des inserts de renforcement en métal.

3. Ressort pneumatique selon la revendication 1 ou 2, **caractérisé en ce qu'**un promoteur d'adhésion est réalisé dans la région de vulcanisation (12) de la plaque de tête (3) sous forme de matériau thermoplastique, qui peut être appliqué en tant que deuxième composant directement lors du processus de fabrication de la plaque de tête (3).
